(19) Europäisches Patentamt
European Patent Office
Office européen des brevets

(11) **EP 3 376 453 A1**

(12) **EUROPEAN PATENT APPLICATION**

(43) Date of publication:
**19.09.2018 Bulletin 2018/38**

(51) Int Cl.:
*G06Q 20/02* (2012.01)    *G06Q 20/06* (2012.01)

(21) Application number: **17305278.8**

(22) Date of filing: **15.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy 02610 Espoo (FI)**

(72) Inventors:
• **PIANESE, Fabio 91620 NOZAY (FR)**
• **SARKAR, Souradip 2018 ANTWERP (BE)**

(74) Representative: **Loyer & Abello 9, rue Anatole de la Forge 75017 Paris (FR)**

(54) **BLOCKCHAIN-BASED ELECTRONIC TRANSFER METHOD AND SYSTEM**

(57) A method for performing a blockchain-based transaction comprising the steps of:

verifying that a second transaction (1002) from the secondary repository (402) of the validator to the secondary repository (302) of the control unit (M) is included in the blockchain, broadcasting a third transaction (1003) from the secondary repository (302) of the control unit to the secondary repository (102) of the first user;

upon verifying that a fifth transaction (1005) from the secondary repository (202) of the second user to the secondary repository (302) of the control unit is included in the blockchain, sending a request for performing a seventh transaction (1007) from the primary repository (301) of the control unit to the primary repository (202) of the second user, and sending a request for performing an eighth transaction (1008) from the primary repository (301) of the control unit to the primary repository (401) of the validator.

FIG.3

## Description

### Field of the invention

The invention relates to the technical field of security within a network of connected devices implementing blockchain technology.

### Background

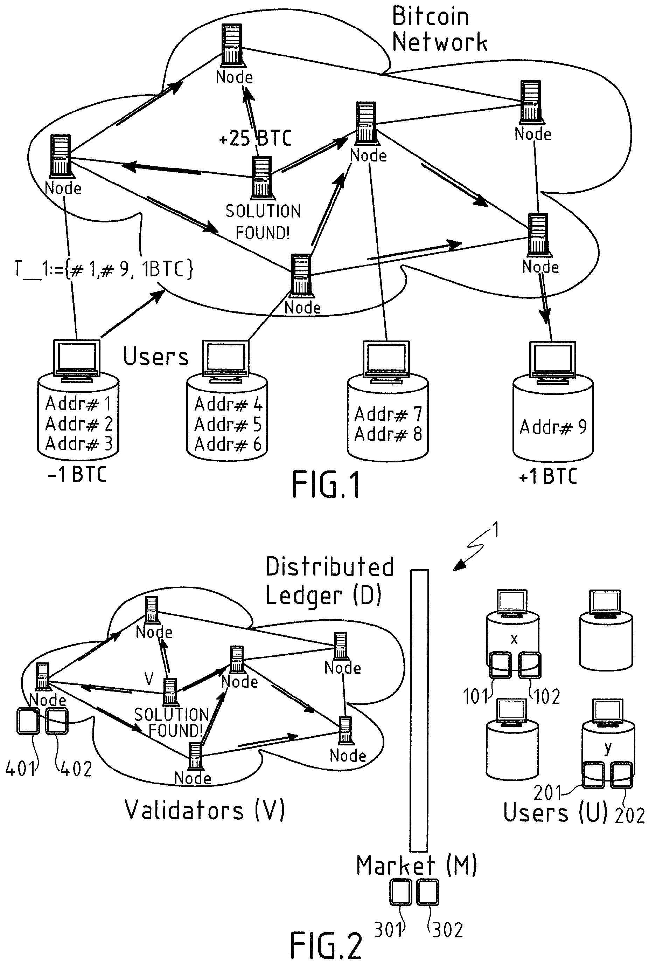

Figure 1 is a representation of a network of nodes implementing the Bitcoin technology. Bitcoin is a decentralized electronic currency system using peer-to-peer networking, digital signatures and cryptographic proof-of-work to enable irreversible transfers (payments) between parties without relying on a trusted third party. Payments are made in bitcoins, a digital currency issued and transferred by the Bitcoin network. Nodes broadcast transactions to the network, which records them in a public history after validating them through a consensus-based proof-of-work system. The present invention is not limited to Bitcoin, and is applicable in other decentralized electronic systems where transfers are made.

The Bitcoin network is designed to incentivize participation by directly compensating with a Bitcoin currency reward (in the form of a transaction to a node-specified Bitcoin address) the first node that solves a randomized proof-of-work (PoW) challenge. Rewards are composed by two sources: newly-minted currency, which is generated from scratch; and transaction fees, which are collected from the transactions over which the successful block, was computed (the list of such transactions is called block). The reward schedule is designed so that the cumulative amount of rewards generated over the entire network lifetime is fixed and known a priori. Hence, the total number of Bitcoins in circulation will reach the asymptotical total of 21 millions. This maximum target amount is enforced by the Bitcoin software (i.e., by developer and user consensus). In order to guarantee such a ceiling in the number of available Bitcoins, the newly-minted currency reward is decreasing and tends asymptotically to zero. Over the long run, transaction fees from the solved blocks are intended to become the main form of incentive.

The self-reinforcing Bitcoin incentive led to the rapid adoption and growth of Bitcoin as a distributed system, which was among the designers' objectives: enthusiasts are drawn to the network; they receive some funds which they can store and trade; some buzz about 'making money out of thin air' starts circulating, drawing crowds to join the network. In turn, the increased membership raises the effort required to an individual adversary for subverting the transaction record.

The incentive was initially successful at driving the network's expansion, but soon started showing its limitations. As soon as enough real money started being at stake, hype on the Bitcoin's growing market valuation drew in investors who speculated on the further growth of Bitcoin's value. Hoarding of the Bitcoin commodity is a problem because, by discouraging the execution of transactions at the present time through the expectation of future gains from saving Bitcoins, it reduces the number of transactions performed and thus the incentive provided by transaction fees.

The ability to compensate miners is now mostly dependent on the minting rewards, and is extremely sensitive to the market valuation of the digital currency unit. Values for the sustainability ratio (defined here as the ratio between total payoff and total cost for contributors to the proof-of-work system) approaching or becoming smaller than unity will rapidly lower the effort contributed toward the operation of the system (and therefore its membership) - unless the value of the currency also keeps increasing. However, as mentioned above, an expectation of increasing currency value will discourage the use of the currency as a medium of exchange, reducing the amount of transaction fees collected. And since the minimum fee in Bitcoin for a transaction to be speedily accepted into the blockchain is fixed, an increase in the valuation of the currency unit will correspond to a higher cost to be paid to facilitate any transaction.

In a nutshell, once the reward for block validation is mainly funded via transaction fees, we can expect the survival of the Bitcoin network to become quite problematic: only a small set of compatible values for transaction fees, transaction volumes, Bitcoin value, electricity prices, and hardware efficiency guarantee that sustainability of the Bitcoin system can be ensured in a stable fashion. Moreover, any deviation from a sustainable steady state will immediately affect the membership of the system through the sudden change of return on investment of the PoW mechanism, leading to a cycle of booms and busts in network size and likely compromising the security properties of the Bitcoin system, which imply a certain inertia in network membership. Unfortunately, an incentive mechanism based on transaction fees (fixed or proportional) ends up interacting perversely with the transaction volume and makes network operation unsustainable in the long run.

### Summary

The basic idea of the invention consists in compensating the lending of digital currency by validators to fund digital currency transactions among the users. The external incentive is administered by the control unit M, a third party entity that facilitates the issue of digital currency funds to the users from the validators. The reward is paid by the control unit M to the validator V in real currency, in order to compensate them of the losses incurred by demurrage of the digital currency while users were performing transactions.

The invention provides a method for performing a blockchain-based transaction from a first user to a second user in an electronic transfer network of connected nodes wherein the nodes include at least the first user, the second user, a validator and a control unit, wherein each node store a same blockchain, and wherein each node stores a primary repository and a secondary repository, the method being performed at the control unit, the method comprising the steps of:

upon receiving from the first user a first request to perform a digital transaction from its secondary repository to the secondary repository of the second user, the first request including a first amount that has being transferred from the primary repository of the first user to the primary repository of the control unit, , verifying that a second transaction from the secondary repository of the validator to the secondary repository of the control unit is included in the blockchain, generating and broadcasting a third transaction from the secondary repository of the control unit to the secondary repository of the first user;

upon verifying that a fifth transaction from the secondary repository of the second user to the secondary repository of the control unit is included in the blockchain, generating and sending a request to an external payment system for performing a seventh transaction from the primary repository of the control unit to the primary repository of the second user, and generating and sending a request to an external payment system for performing an eighth transaction from the primary repository of the control unit to the primary repository of the validator.

In embodiments, the method further includes verifying that the fifth transaction references outputs of a fourth transaction from the secondary repository of the first user to the secondary repository of the second user, and that fourth transaction references outputs of the third transaction.

In embodiments, the method further includes

upon verifying that the fifth transaction from the secondary repository of the second user to the secondary repository of the control unit is included in the blockchain, generating and broadcasting a sixth transaction from the secondary repository of the control unit to the secondary repository of the validator.

In embodiments, each secondary repository is associated with a public key and a private key.

In embodiments, the third transaction includes a public key associated to the secondary repository of the first user, the third transaction being signed using a private key associated to the secondary repository of the control unit.

In embodiments, the sixth transaction includes a public key associated to the secondary repository of the validator, the sixth transaction being signed using a private key associated to the secondary address of the control unit.

In embodiments, an eighth amount of the eighth transaction is computed as a function of a first amount included in the first request and of the number of blocks included in the blockchain between a block storing the second transaction and a block storing the sixth transaction.

In embodiments, the seventh amount is less than the first amount.

The invention also provides a control unit configured to communicate with a blockchain based electronic transfer network that includes multiple nodes, each node storing a copy of a same blockchain, wherein the plurality of nodes includes at least a first node, a second node, a validator, and wherein each node stores a primary repository and a secondary repository, the control unit being configured for

upon receiving from the first user a first request to perform a digital transaction from its secondary repository to the secondary repository of the second user, the first request including a first amount that has being transferred from the primary repository of the first user to the primary repository of the control unit, verifying that a second transaction from the secondary repository of the validator to the secondary repository of the control unit is included in the blockchain, generating and broadcasting a third transaction from the secondary repository of the control unit to the secondary repository of the first user;

upon verifying that a fifth transaction from the secondary repository of the second user to the secondary repository of the control unit are included in the blockchain, generating and sending a request to an external payment system for performing a seventh transaction from the primary repository of the control unit to the primary repository of the second user, and generating and sending a request to an external payment system for performing an eighth transaction from the primary repository of the control unit to the primary repository of the validator.

In embodiments, the control unit is further configured for verifying that the fifth transaction references outputs of a fourth transaction from the secondary repository of the first user to the secondary repository of the second user, and that fourth transaction references outputs of the third transaction.

In embodiments, the control unit is further configured to compute an eighth amount of the eight transaction as a function of a first amount included in the first request and of the number of blocks included in the blockchain between a block storing the second transaction and a block storing the sixth transaction.

The invention also provides a network for performing a blockchain-based transaction from a first user to a second user in an electronic transfer network of connected nodes, wherein the nodes includes at least a first node, a second node, a validator and a control unit, wherein each node share a same blockchain, and wherein each node stores a primary repository and a secondary repository.

The invention also provides a computer program comprising executable code that causes a computer to perform all the steps of a method as described above when executed.

The invention encourages transactions among the holders of the cryptocurrency, which would ensure that the reward given to the verifiers is commensurate with the system's external utility as a payment medium.

Among the technical effects of the invention are:

- The reward given to the validators is tightly coupled in time and utility value with their contribution, ensuring a steady involvement of validators throughout the life of the system;

- The reward system is technically sustainable and can accommodate large variations in most system variables, including: size of network and available computing power, transaction load and total nominal amount, local pricing of electricity;

- The system can converge to an equilibrium that ensures both a) efficient allocation of computing resources (and of their energy footprint), and b) transaction costs to the end user that can be made competitive with classic electronic payment systems and possibly proportional to the transaction's nominal value, enabling digital micro-transactions.

**Brief description of the drawings**

These and other aspects of the invention will be apparent from and elucidated with reference to the embodiments described hereinafter, by way of example, with reference to the drawings.

Figure 1 is a representation of a network with connected devices implementing the blockchain technology.
Figure 2 is a representation of a network according to an embodiment of the invention.
Figure 3 illustrates the method for performing an end-to-end electronic payment according to an embodiment of the invention.

**Detailed description of the embodiments**

Figure 2 is a representation of an electronic transfer network 1 of connected nodes implementing the blockchain technology.

Some nodes are validators V who contribute computational effort to the system in exchange for a reward, and users U who take part in transactions as senders and receivers.

The network further includes a control unit M, also called the market. The control unit M may include one or many different nodes that are operated by different entities.

The network 1 is a broadcast network that propagates transactions and blocks.

Each user controls a primary repository and a secondary repository. The two repositories function as a pair of digital wallets. The primary repository is held by an external payment system and stores a budget in a real currency. The secondary repository is held by the electronic transfer network 1 and allows to operate transactions in a digital currency such as Bitcoin. The secondary repository functions as a digital wallet. A digital repository can be stored in a memory. The user can store a budget, in a digital currency in his secondary repository. This budget contains funds having a value.

Funds are unspent transaction outputs (UTXO) that can be further spent. Keys to be used for unlocking UTXOs are held by users in their secondary repositories. A UTXO includes a private cryptographic key and at least one public cryptographic key (or address) that has been generated based on the at least one private cryptographic key. An address is an identifier that represents a possible destination for a transaction.

An end-to-end electronic payment is a real currency payment between two end users.

A transaction is a digital transaction that operate on sums of digital currency carried by the transfer network and verified by the blockchain.

A transaction is created when a node U prepares and broadcasts a new message to the rest of the network 1 instructing them to operate on the global state of the electronic transfer message.

A transaction enacts a transfer of value from a set of addresses controlled by an end-user to another set of addresses controlled by another end-user.

A transaction is a digital code based on one or more unspent outputs from earlier transactions, one or more addresses derived from the public key whose private key the receiver controls, and the amount to be transferred. The digital code is furthermore signed using a private encryption key related to the sender. The signature can be verified by anyone by way of the sender's public keys. The digital code makes clear what (amount) is to be transferred from who (sender - who controls unspent transaction outputs) to whom (receiver - one or more addresses).

A transaction is published to the network by the sender. Peers broadcast the transactions they receive to their neighbors. All validator peers trying to solve blocks collect the transaction records and add them to the block $B_z$ they are working to solve.

A transaction only takes effect after publication of the transaction. In fact the transfer becomes effective after validation by the network, meaning that after publication the public has the power to invalidate a published transfer if it considers the transfer not valid (for example because the UTXOs referenced did not contain the transferred amount of funds or because the sender's signature is erroneous). The decentralized electronic system has validation mechanisms by which the public can accept or reject published transfers.

Validators and miners calculate whether newly published digital codes representing new transactions are coherent with the existing chain.

If the digital code is coherent with the existing chain, miners include the new transactions into a new block which is added to the end of the chain and can never be changed or removed once accepted by the network.

If the digital code is in incoherence with the existing chain, the digital code is rejected thereby invalidating the transaction represented by the digital code.

Each block contains, among other things, a record of recent transactions and a reference to the block that came immediately before it.

The blockchain is shared by all nodes of the network. With this information, one can find out how much value belonged to each address at any point in history.

Each transaction $t_g$ has at least one input $N(t_g)$ and at least one output $M(t_g)$.

Each input $N(t_g)$ references at least one output $M(t_a)$ from a past transaction $t_a$ stored in a past block $B_x$.

A standard transaction contains instructions for sending bitcoins from one or more UTXOs, referenced as the transaction inputs. Transaction output(s) indicate the receiver address and the value that the owner of the address shall be entitled to spend when claiming said value by signing a future valid transaction.

Each standard transaction further contains the public key of the sender and a signature based on the private key of the sender. To reference an UTXO, a new transaction's input must provide a signature made with a private key matching the public key associated with the address stored in the UTXO. The public key of the sender is used to verify the signature provided in the input. The valid signature of the transaction input together with the public key of the address referenced by the input proves that the user claiming the UTXO is authorized to spend the balance, for a user must know the relative private key to generate a valid signature.

Transactions imply that one or more inputs withdraw the coins that were previously deposited in one or more outputs. The difference between amount in the outputs and inputs of a transaction is called an implicit transaction output and is kept by the validator as transaction fees. Values $M(t_a)$ associated with explicit outputs are recorded as Unspent Transaction Outputs (UTXOs) until a later transaction spends them.

When a transaction is published in the network, the validator first verifies, at a transaction validation step, that inputs are authorized to collect the values of referenced outputs. To that end, the validator verifies that the input's signature matches the referenced output's public key. The validator then verifies that the address from which the funds are drawn contains enough funds.

A nominal demurrage or nominal deflation is enforced in the network, by enforcing a negative interest rate during the transaction verification process on the value of all existing outstanding transaction outputs (UTXOs) recorded in the blockchain.

To that end, UTXO values are implicitly trimmed over time based on the demurrage rate and the block height of each UTXO t_i, which we note as ∆T(t_i). The block height of a UTXO is the number of blocks in the chain between the block storing the UTXO and the last block of the chain at the time of observation.

To that end, the transaction validation step takes into account the block height, that is the age in blocks of all of its transaction output. The transaction validation step includes verifying at the time a transaction takes place whether the sum of transaction outputs after devaluation is equal or larger than the sum of the new transaction's inputs.

For every block solved between the current block and the block including the output being referenced, the available funds of an UTXO are multiplied by a factor 0<r<1, where r=1-d and d>0 is the demurrage rate. In the simplest case of a new transaction N, validated at current block $B_z$, referencing an unspent output $t_a$ of transaction M stored in block $B_x$ (with no other prior use of the address a), the maximum valid value of transaction $N(t_g)$ will be "aged" by the block height z-x:

$$N\left(t_g\right) = M\left(t_a\right)r^{z-x}, \quad z > x, \quad 0 > r > 1$$

If several transactions exist that credit the same address *a* in past blocks, the valid amounts associated with each of them at block $B_z$ are individually processed by tracking the number of blocks elapsed since each transaction in which the address was credited.

It follows that the value of each input $N(t_g)$ of a given new transaction $t_g$ with multiple input addresses cannot be larger than the sum value of the individual outputs $M(t_a)$ it references after the loss by demurrage rate *r* has been accounted for as explained above.

We suppose for the rest of this document that the value of digital currency a user receives (by means of a transaction mediated by M) in her secondary repository decreases geometrically at a constant rate r over subsequent blocks. The value stored in a secondary repository will halve every $log_r(1/2)$ blocks and eventually reach zero when the decimal precision of the accounting unit (in Bitcoin's case it's $10^{-8}$) cannot represent its value any longer. By consequence, the entire monetary mass existing at a given time will be decreasing over time. To achieve a steady state in the supply of currency, new units need to be introduced into the system at every block to compensate the demurrage loss. If we suppose that at every block a constant reward of q units is attributed to the solver of the proof-of-work challenge, the total amount of currency in existence at any given moment (after steady state is reached) will be

$$C = \sum_i^\infty q_i = q + qr + qr^2 + \dots = \frac{q}{1-r}.$$ Parameters q and r are therefore sufficient to determine the overall behavior of this payment system.

A currency that cannot retain its value over time because of demurrage is an unlikely target for hoarding, and therefore has negligible value per se. Accordingly, if the mere ownership of the digital currency received as reward for the verification work cannot be monetized, it is unlikely that the original Bitcoin incentive as a whole would work as intended.

The invention describes an incentive mechanism that is based on demurrage losses and guarantees an overall reward to miners which is proportional to the transaction volume in the network. Incentive is provided in the form of a secondary mechanism, in which validators, holders of positive balances from a Bitcoin-like form of incentive, lend digital currency to the users of the payment system through a control unit M in exchange for a monetary reward and with the implied obligation to claim those sums back at the end of a chain of transactions. We call this new form of incentive an "external or indirect incentive", as opposed to the "internal or direct" incentive implemented by the Bitcoin digital transfer system

The Bitcoin proof-of-work incentive is maintained in D as a means of controlling currency generation. However, the decline of nominal currency value enforced by the system at a fixed negative interest rate motivates validators to turn to the control unit M for trading the digital currency from the direct incentive, which would lose value over time, into real currency. Compensation of active system membership and of the computational effort expended becomes thus coupled in time with the actual transaction workload and liquidity demand.

The incentive provided by the control unit M rewards the act by which validators (holding digital currency, both as a result of successful proof-of-work delivery or receipt of reclaimed funds from earlier transactions) make the digital currency available to other users thus enabling them to perform end-to-end electronic payments.

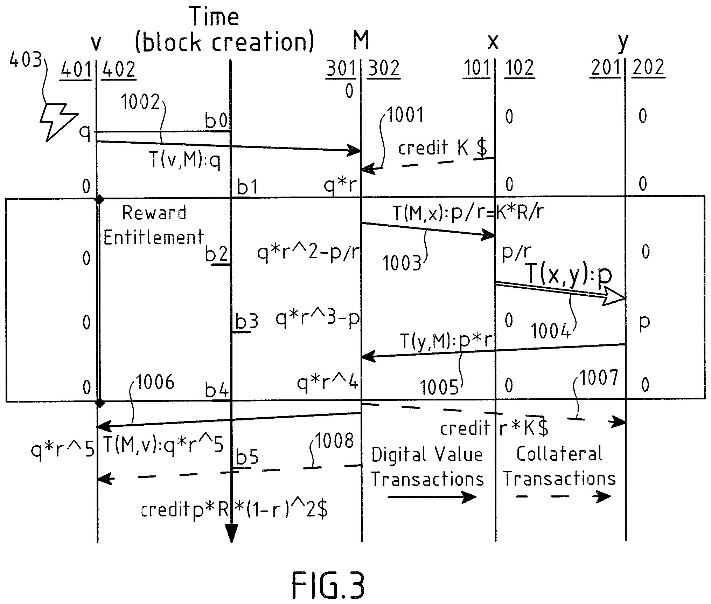

It will now be described in relation to figure 3, how a digital transaction 1004 from a first user x to a second user y is performed.

User x wants to initiate a digital currency transaction to user y against goods or services rendered outside the digital transfer system.

To that end, at a first transaction 1001, the first user x pays K in real currency from its primary repository 101 to obtain, at a later time and with transaction 1003, p units of digital currency sent to an address stored in its secondary repository 102, which user x will then be able to transfer to an address stored in the second user y's secondary repository 202, at a later time with transaction 1004. User x will be purchasing an amount of accounting units p of digital currency at a given exchange rate R which she will send to user y, who will be able to redeem her digital currency credit by trading it back to the control unit M. The control unit M can apply a price spread s between the buy and sell prices in order to fund its own operation.

In order to generate a transaction of a value K from its first repository 101 to the first repository 201 of the second user, the first user x needs to acquire digital currency. In order to do so, the first user x generates a first transaction 1001 from its primary repository 101 to the primary repository 301 of the control unit M.

The first amount of transaction 1001 be K is expressed in real currency units (such as US dollars).

This first transaction 1001 is equivalent to the first user x establishing a credit with the control unit M in its first repository. Details on how real currency transactions can be conducted that result on credit being accrued on primary repositories are beyond the scope of this invention.

Independently from the above transaction, a validator v successfully generates a valid PoW solution of block b0. An address corresponding to a public key contained in its secondary 402 gets q digital currency units credited by the direct incentive mechanism of the blockchain 403 as a reward for creating a new block.

As the validator v wishes to convert its direct reward 403 into real currency units, it transfers the newly-created digital funds to the control unit M. it broadcasts a second transaction 1002 from its secondary repository 402 to the secondary repository 302 of the control unit M. This transaction 1002 will be included in the blockchain at block b1.

After the second transaction 1002 has been recorded in the blockchain, the control unit M has liquidity available to be provided to users who wish to transact using the digital currency.

At the demand of user x, who holds a credit with M due to the first transaction 1001, M generates and broadcasts a third transaction 1003 from its secondary repository 302 to the secondary repository 202 of the first user x.

The third transaction 1003 is the transaction by which user x retrieves an amount of digital currency (purchased with 1001) to perform transaction 1004. It credits an address in its secondary repository 102 with the necessary digital funds p that user x will be able to spend starting from block b3.

The third transaction 1003 gets recorded at block b2. The third amount is p/r units, which will enable user x to generate transactions for up to p units starting from block b3. This transaction will enable user x to generate transactions for up to p units. Notice that p units are the corresponding amount of the K units of credit transacted from the first repository 101 of the first user, converted by an exchange rate R controlled by the control unit M with an optional spread

s. Thus $p = \dfrac{K}{R(1+s/2)}$.

Upon verifying that the third transaction 1003 has been recorded in the blockchain, the first user generates and broadcasts a fourth transaction 1004 from its secondary repository 102 to the second user secondary repository 202.

The fourth transaction 1004 gets recorded at block b3.

Upon verifying that the fourth transaction 1004 has been recorded in the blockchain, the second user y generates and broadcast a transaction 1005 from its secondary repository 202 to the control unit secondary repository 302.

Transaction 1005 is the transaction by which user y unlocks the redemption of real currency value (transaction 1007) that it received in transaction 1004 from user x.

Transaction 1005 gets recorded at block b4.

Upon verifying that transaction 1005 has been recorded in the blockchain, the control unit M generates a request for performing a seventh transaction 1007, and an eighth transaction 1008 in the real currency payment system. These transactions respectively settle the claim of user y, delivering a payment in his first repository 201, and provide the accrued indirect incentive to validator v in his first repository 401.

A necessary condition for the control unit M to accept claims for reimbursement from users in transaction 1005 is that the entire amount of digital currency utilized for it must link back (through a chain of transactions, such as 1003, 1004, 1005) to a transaction that had been previously mediated by control unit M. This condition prevents the immediate reclaiming of the full accounting value of the direct incentive by validators V, for the blockchain provides a full public record of the history of transactions relative to any outstanding balance. The condition must be enforced by M, for instance by keeping a database of authorized addresses contained in M's second repository 302 through which the digital funds need to have passed to entitle the bearer for a claim. Should any transaction be submitted to M without fulfilling this condition, it should be ignored or returned. Whatever and however many transactions of type 1004 might there be in the following exchanges - a transaction 1003 needs exist before a transaction 1005 can be received and acted upon by M. The control unit M therefore verifies that the fifth transaction 1005 references outputs of a fourth transaction 1004 from the secondary repository 102 of the first user to the secondary repository 202 of the second user 1004, and that fourth transaction 1004 references outputs of the third transaction 1003.

The sixth transaction 1006 is from the control unit secondary repository 302 to the secondary repository of the validator 402. It allows the validator v to reclaim unused digital currency that it had deposited with the control unit M. Control unit M generates and broadcasts a sixth transaction 1006 upon validator v demand, which may be expressed independently from the end-to-end payment process between users x and y.

The sixth transaction 1006 includes a signature based on the private key associated to the control unit secondary repository 302 and a public key of the secondary repository of the validator 402, and a sixth amount equal to $qr^5$. Demurrage applies a multiplicative factor r of all the outstanding balances at each subsequent block. $q$ digital currency available at block b0, is equal to $qr^5$ digital currency at block b5. Transaction 1006 gets recorded at block b5.

The seventh transaction 1007 is from the primary repository 301 of the control unit and the primary repository 201 of the second user.

The seventh transaction 1007 amount is equal to $p \cdot R\left(1 - \dfrac{s}{2}\right) \cdot r^{b4-b2-1} = K\dfrac{R\left(1-\frac{s}{2}\right)}{R(1+)}r^{b4-b2-1} \cong K \cdot (1-s) \cdot r^{b4-b2-1}$ with R being the exchange rate between digital and real currency, b4 being the last block of a payment (1005); b2 is the first block of a payment (1003); b4-b2 is the duration of a payment, s is the spread applied by M on the value of the exchange rate R, and K the value in units of credit of the end-to-end transaction that was first evoked in transaction 1001.

The eighth transaction 1008 is from the control unit primary repository 301 and the primary repository 401 of the validator.

The eighth transaction 1008 amount is equal to $p \cdot \hat{R} \cdot (1 - r)^{b4-b2-1} \cong K \cdot (1 - r)^{b4-b2-1}$.

The eighth transaction 1008 is a reward for the validator. Whenever a transaction is funded thanks to the digital currency made available by the validator, the value lost to demurrage of the digital currency between the drawing of the funds (at block b2) and their return (at block b4) is paid by M to v at the agreed reward rate $\hat{R}$, which should be not higher than the exchange rate R.

A transaction's cost is thus made proportional to its amount and its duration: every transaction has a positive cost (which is borne by the receiver, and likely included by it in the agreed price) and results in a reward in real currency being offered by the control unit M to the validator v which is enforced by the demurrage fee and paid for by the difference between the exchange rate R and the reward rate $\hat{R}$ and possibly by the spread s.

The validator v is able to verify the honesty of the control unit by inspecting the public transaction record as recorded in the blockchain and track the values for b2 and b4 and the digital currency amount contained in transactions 1004 and 1007, on which real currency amount dispensed by transaction 1008 the reward depends.

The reward in real currency offered to the validator v is proportional to the size and the duration of the transaction. This reward is not the same as a transaction fee. Indeed, in a bitcoin system, the value of transaction fee is set by the user. If transaction fees are non-zero, it is convenient for a validator to just accept whatever the transaction fee is since it is better than nothing. On the contrary, the invention forces the proportionality of miner reward to the size and the duration of the transaction, something not possible in bitcoin and other cryptocurrencies.

The intrinsic value of the exchange rate R is mostly irrelevant to users x and y as it is supposed constant during the short time in which the transaction is accomplished. It can therefore be set by M to a conventional value. This does not need to reflect the utility value provided by the payment system, which is economically linked to the cost of its operation through factors such as energy footprint of the proof-of-work computation by the entire pool V of validators, hardware depreciation, etc. The ability to independently regulate R allows an equilibrium to be enforced by M that prevents the uncontrolled escalation of computational capacity driven by speculation on future currency value, ensuring an optimal trade-off between blockchain security features, validator reward, and energy footprint of the system.

The control unit M behaves as a clearing system. Its implementation can be either centralized or distributed.

The control unit M provides the facility for mediating the offer and the demand of digital currency units and guarantees a reward in real currency for the lenders.

Hence, this external reward process is logically decoupled by the digital currency generation process and can be made proportional to the amount of digital currency units that were consumed by demurrage. This allows the enforcement of a relationship between the utility provided by the computational work done, the expense incurred in providing such work, and the actual compensation received by contributor nodes.

Elements such as the nodes of the network and in particular the first node x, the second node y, the validator V, the control unit M, could each be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. Method for performing a blockchain-based transaction from a first user (x) to a second user (y) in an electronic transfer network (1) of connected nodes (x, y, V, M) wherein the nodes include at least the first user (x), the second user (y), a validator (V) and a control unit (M), wherein each node store a same blockchain, and wherein each node stores a primary repository (101, 201, 301, 401) and a secondary repository (102, 202, 302, 402),
   the method being performed at the control unit (M),
   the method comprising the steps of:

   upon receiving from the first user (x) a first request (1001) to perform a digital transaction from its secondary repository (102) to the secondary repository (202) of the second user, the first request (1001) including a first amount that has being transferred from the primary repository (101) of the first user to the primary repository (301) of the control unit (M), verifying that a second transaction (1002) from the secondary repository (402) of the validator to the secondary repository (302) of the control unit (M) is included in the blockchain, generating and broadcasting a third transaction (1003) from the secondary repository (302) of the control unit to the secondary repository (102) of the first user;

upon verifying that a fifth transaction (1005) from the secondary repository (202) of the second user to the secondary repository (302) of the control unit is included in the blockchain, generating and sending a request to an external payment system for performing a seventh transaction (1007) from the primary repository (301) of the control unit to the primary repository (202) of the second user, and generating and sending a request to an external payment system for performing an eighth transaction (1008) from the primary repository (301) of the control unit to the primary repository (401) of the validator.

2. Method according to claim 1, further including verifying that the fifth transaction (1005) references outputs of a fourth transaction (1004) from the secondary repository (102) of the first user to the secondary repository (202) of the second user (1004), and that the fourth transaction (1004) references outputs of the third transaction (1003).

3. Method according to claim 1 or 2, further including
upon verifying that the fifth transaction (1005) from the secondary repository (202) of the second user to the secondary repository (302) of the control unit is included in the blockchain, generating and broadcasting a sixth transaction (1006) from the secondary repository (302) of the control unit to the secondary repository (402) of the validator.

4. Method according to any one of claims 1 to 3, wherein each secondary repository (102, 202, 302, 402) is associated with a public key and a private key.

5. Method according to claim 4, wherein the third transaction (1003) includes a public key associated to the secondary repository (102) of the first user, the third transaction (1003) being signed using a private key associated to the secondary repository (302) of the control unit.

6. Method according to claim 3 and 4 in combination, wherein the sixth transaction (1006) includes a public key associated to the secondary repository (402) of the validator, the sixth transaction (1006) being signed using a private key associated to the secondary address (302) of the control unit.

7. Method according to any of claims 1 to 6, wherein an eighth amount of the eighth transaction (1008) is computed as a function of a first amount included in the first request (1001) and of the number of blocks included in the blockchain between a block (b1) storing the second transaction (1002) and a block (b3) storing the sixth transaction (1006).

8. Method according to any of claims 1 to 7, wherein the seventh amount is less than the first amount.

9. Control unit (M) configured to communicate with a blockchain based electronic transfer network (1) that includes multiple nodes, each node storing a copy of a same blockchain, wherein the plurality of nodes includes at least a first node (x), a second node (y), a validator (V), and wherein each node stores a primary repository (101, 201, 301, 401) and a secondary repository (102, 202, 302, 402), the control unit (M) being configured for:

upon receiving from the first user (x) a first request (1001) to perform a digital transaction from its secondary repository (102) to the secondary repository (202) of the second user, the first request (1001) including a first amount that has being transferred from the primary repository (101) of the first user to the primary repository (301) of the control unit (M), verifying that a second transaction (1002) from the secondary repository (402) of the validator to the secondary repository (302) of the control unit (M) is included in the blockchain, generating and broadcasting a third transaction (1003) from the secondary repository (302) of the control unit to the secondary repository (102) of the first user;

upon verifying that a fifth transaction (1005) from the secondary repository (202) of the second user to the secondary repository (302) of the control unit are included in the blockchain, generating and sending a request to an external payment system for performing a seventh transaction (1007) from the primary repository (301) of the control unit to the primary repository (202) of the second user, and generating and sending a request to an external payment system for performing an eighth transaction (1008) from the primary repository (301) of the control unit to the primary repository (401) of the validator.

**10.** Control unit (M) according to claim 9, further configured for verifying that the fifth transaction (1005) references outputs of a fourth transaction (1004) from the secondary repository (102) of the first user to the secondary repository (202) of the second user (1004), and that fourth transaction (1004) references outputs of the third transaction (1003).

**11.** Control unit (M) according to claim 9 or 10, further configured to compute an eighth amount of the eight transaction (1008) as a function of a first amount included in the first request (1001) and of the number of blocks included in the blockchain between a block (b1) storing the second transaction (1002) and a block (b3) storing the sixth transaction (1006).

**12.** Network for performing a blockchain-based transaction from a first user to a second user in an electronic transfer network of connected nodes, wherein the nodes includes at least a first node (x), a second node (y), a validator (V) and a control unit (M) according to any of claims 9 to 11, wherein each node share a same blockchain, and wherein each node stores a primary repository (101, 201, 301, 401) and a secondary repository (102, 202, 302, 402).

**13.** A computer program comprising executable code that causes a computer to perform all the steps of a method in accordance with any one of claims 1 to 8 when executed.

Bitcoin
Network

Node

Node

+25 BTC

Node

Node

SOLUTION
FOUND!

Node

T_1:={# 1,# 9, 1BTC}

Node

Users

Node

| Addr# 1 | Addr# 4 | Addr# 7 | Addr# 9 |
| Addr# 2 | Addr# 5 | Addr# 8 | |
| Addr# 3 | Addr# 6 | | |

−1 BTC

FIG.1

+1 BTC

Distributed
Ledger (D)

1

Node

V

SOLUTION
FOUND!

Node

Node

Node

Node

x

101        102

401   402

201        202

Validators (V)

Users (U) 202

Market (M)

301    302

FIG.2

Time
(block creation)

v          M          x          y

403 401 402                    301 302          101 102          201 202

0

1002                              1001          0                    0
q                      b0         credit K $

T(v,M):q

0                    b1    q*r                                    0                    0

Reward                T(M,x):p/r=K*R/r
Entitlement    b2                                              p/r                    0
        q*r^2-p/r    1003                    T(x,y):p

b3    q*r^3-p                              0    1004              p

T(y,M):p*r

0    1006    b4    q*r^4              1005          0    1007          0

credit r*K$

q*r^5 T(M,v):q*r^5    b5    1008          Digital Value    Collateral
                                          Transactions    Transactions

creditp*R*(1-r)^2$

FIG.3

Europäisches
Patentamt
European
Patent Office
Office européen
des brevets

**EUROPEAN SEARCH REPORT**

Application Number

EP 17 30 5278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Satoshi Nakamoto: "Bitcoin: A Peer-to-Peer Electronic Cash System", , 31 October 2008 (2008-10-31), XP055387899, Retrieved from the Internet: URL:http://nakamotoinstitute.org/static/docs/bitcoin.pdf [retrieved on 2017-07-04] * pages 1-9 * | 1-13 | INV. G06Q20/02 G06Q20/06 |
| X | Freicoin Developers: "About Freicoin", , 21 November 2016 (2016-11-21), XP055401779, Retrieved from the Internet: URL:https://web.archive.org/web/20161121175058/http://freico.in/about/ [retrieved on 2017-08-28] * pages 1-5 * & Satoshi Nakamoto ET AL: "freicoin/src/main.cpp", , 15 August 2016 (2016-08-15), XP055401785, Retrieved from the Internet: URL:https://github.com/freicoin/freicoin/blob/4bd3c020dd9c2302fb0e983092a9109e52af2cc2/src/main.cpp [retrieved on 2017-08-28] * the whole document * | 1-13 | |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 1 September 2017 | Horat, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)